# EUROPEAN PATENT SPECIFICATION

(11) **EP 4 096 565 B1**
(45) Date of publication and mention of the grant of the patent: **13.03.2024**
(21) Application number: 21702482.7
(22) Date of filing: 28.01.2021
(51) Int. Cl.: A61C 1/07, A61C 17/20, A61C 3/03, A61C 17/16

(54) **TOOL FOR A MEDICAL TREATMENT**
WERKZEUG FÜR EINE MEDIZINISCHE BEHANDLUNG
OUTIL POUR UN TRAITEMENT MÉDICAL

(30) Priority: 28.01.2020 EP 20154168
(43) Date of publication of application: 07.12.2022
(73) Proprietor: Ferton Holding S.A., 2800 Delémont (CH)
(72) Inventor: BIENAIMÉ, Alex, 39220 Les Rousses (FR); VUILLET, Romain, 98192 Kiruna (SE); LEBRETON, Etienne, 1023 Crissier (CH); MOSIMANN, Laurent, 1291 Commugny (CH); BEANI, Florent, 01170 Gex (FR)
(74) Representative: Müller Schupfner & Partner Patent- und Rechtsanwaltspartnerschaft mbB
(86) International application number: PCT/EP2021/052035
(87) International publication number: WO 2021/152046

(56) References cited:
- US-A- 4 295 827
- US-A- 4 492 574
- US-A- 4 505 676
- US-A- 5 236 358

## Description

The present invention concerns a tool for a medical treatment.

Particularly, the present invention concerns a tool for a medical treatment that performs a vibration movement such as an oscillating movement during its operation. For example, the tool is a scaler that is intended for removing dental calculus during a dental treatment.

Dental calculus develops mostly in mouth areas that are difficult to access, in particular during home care treatments, for example by a toothbrush or a water spray treatment. These areas are also difficult to access during a professional care treatment, especially during scaling, and calculi formed are hard and strongly attached to the teeth.

Ultrasonic scaling instruments are well known to remove hard calculus due to their power of ultrasonic vibrations and a low impact on teeth. A removal capacity of the ultrasonic scaling instrument is achieved by their ultrasonic vibrational power.

Such dental ultrasonic scaler instruments typically include a liquid irrigation having the following benefits: Firstly, this irrigation limits an undesired tissue burning caused otherwise due to the ultrasonic motion of the tool tip. Secondly, the irrigation improves a sliding effect with reduced friction coefficient of the tool tip on the dental tissue resulting in a reduced abrasion of the dental tissue and therefore in a minimal invasive treatment. Thirdly, irrigation in periodontal pockets enables a consequent cleaning. It corresponds to a rinsing effect. Fourthly, the combination of the irrigation fluid and the ultrasonic movement can cause a cavitation effect.

However, aerosols produced by the scaler create a risk of patient and operator contamination. Moreover, irrigation often does not reach the tip extremity, for example a pointed distal end of the tool tip. That can cause iatrogenic damages.

When the ultrasonic power level is increased, it modifies the water spray and decreases the amount of irrigation reaching the tip extremity. In such a scenario, the operator has to decide between reducing the power level or increasing excessively the irrigation, i. e. the amount of the irrigation fluid. None of these options is satisfying for the operator. In particular, increasing the amount of the irrigation fluid causes a high liquid consumption and a frequent reservoir refill of a reservoir supplying the liquid to the tool tip is necessary. Further, the excess of irrigation causes a fog in a treatment area and modifies the visibility.

US 4,295,827 A, US 4,492,574 A and US 4,505,676 A disclose ultrasonic treatment devices being intended for endodontic treatments. US 5,236,358 A concerns an abrasive tool having a tool tip being attached to the handpiece by a mechanism using a screw.

Considering the above, it was an object of the present invention to improve the tools for medical treatments, in particular for dental treatments, wherein the tool performs a vibration movement during its operation, particularly to improve providing an irrigation fluid.

This object is achieved by the tool according to claim 1. Preferred embodiments are incorporated in the dependent claims, the description and the figures.

According to the present invention a tool for a medical treatment in particular a dental treatment, is provided, comprising
- a handpiece having a vibration source,
- a moving part of the handpiece, performing a vibration movement along a vibration direction in a vibrating state,
- a tool tip being connected to the moving part of the handpiece in an interface section, in a non-vibrating state, the tool tip extending along an extending direction, in particular along a straight extending direction, while in the vibrating state the tool tip performs a flexural movement in a plane extending along the extending direction of the tool tip and perpendicular to the cross section of the tool tip, and
- at least one outlet channel for ejecting an irrigation fluid along an ejecting direction,
wherein the tool is configured such that the irrigation fluid travels to a distal end of the vibrating tool tip without crossing the tool tip.

Contrary to the prior art, the tool, for example the course of the tool tip and/or the orientation of the outlet channel ejecting the irrigation liquid stream, is configured such that the irrigation fluid travels to a distal end of the tool tip without crossing the tool tip. Without "crossing the tool tip" means that the irrigation fluid or a substantial part of the irrigation fluid is not redirected or reflected by an interaction with the tool tip on its way to the pointed tip of the tool tip, in particular, by an effect of impinging on an outside of the tool tip, more precisely a central part or middle section of the tool tip. Thus, it is advantageously avoided that the ejected fluid will be reflected by the middle section of the tool tip, causing otherwise during a fast vibrational movement of the tool tip a fog that hinders the operator from a free visible access to a treatment zone. Furthermore, the amount of irrigation fluid that is used can be reduced because almost the whole irrigation fluid can be used in the treatment zone. In contrary, those configurations of the prior art that cause a reflecting of the irrigation fluid at the outside of the tool tip, in particular by a middle section of the tool tip, need to compensate the loss of reflected irrigation fluid by increasing the amount of provided irrigation fluid. In the vibrating state the tool tip according to the invention performs a flexural motion in a plane extending along the extension direction of the tool tip and perpendicular to the cross section of the tool tip according to the invention. For example, the performed vibration of the tool tip is small. For instance the amplitude is smaller than 100 µm (max displacement peak). In the non-vibrating state, no vibration of the vibration source is transferred to the tool tip, but the tool tip is preferably connected to the moving part.

For avoiding a substantial or total crossing of the irrigation fluid and the tool tip, the extending direction of the tool tip has a course
- being parallel to the ejecting direction or
- being slanted away from the ejecting direction or
- crossing the ejection direction only at a distal end of the tool tip, i. e. at the pointed tip of the tool tip, for example.

In particular, it is provided that the moving part includes a cylinder-like section in the interface section, wherein the cylinder-like section comprises the recess for receiving the tool tip. In other words: the distal end of the moving part, in particular of the sonotrode of the transducer, is formed as a cylinder-like section. A symmetry axis of such a cylinder-like section is orientated parallel and preferably concentric to the extending direction of the recess or the non-bended tool tip in the mounted state. Furthermore, it is conceivable that the moving part includes a shaft section in addition to the cylinder-like section at the distal end of the moving part. The shaft section has preferably a reduced cross section in a direction being perpendicular to the vibration direction. For example, the shaft section is formed by two flat surfaces being parallel to each other. The parallel surfaces simplify handling during inserting the tool tip into the recess, since the moving part can be gripped in a simpler manner.

The ratio of the distance between the two parallel surfaces is smaller than an outer diameter of the cylinder like section. In particular, a ratio of the distance to the outer diameter is between 0.5 and 0.9, preferably between 0.6 and 0.8 and more preferably between 0.7 and 0.78. Such a slim shaft section reduce the probability that the shaft blocks the view to the tool tip during operation, in particular to a treatment zone. Furthermore, the configuration of the cylinder like section and the shaft section can simple be manufactured by milling. The shaft section extends preferably to the handpiece, i. e. in a region being outside of a hosing forming the handpiece. Another benefit of the cylinder-like section is avoiding any coupled lateral mode and therefore guaranteeing a better control of the vibration direction.

Since the operator has direct visual access to the tip, he is directly informed about the vibration direction. As a result a safer treatment for the patient can be guaranteed, resulting in a low invasive treatment and less or no pain.

Such configurations or combinations of the design of the extension of the tool tip and the at least one outlet channel, defining the direction of a stream of the ejected irrigation fluid, avoids a crossing of the ejected irrigation fluid and the course of the tool tip.

Preferably, the tool is a dental treatment tool for removing calculus and/or a surface treatment of a tooth, in particular subgingival and/or supergingival. Such a tool might be a scaler. Preferably, the tool tip is located during operation next or close to the dental calculus for removing calculus by an outside treatment of the tooth or teeth. For example, the vibration source, in particular the ultrasound vibration source, causing the vibration motion of the moving part, comprises a piezo element that causes a translation movement of the moving part along the vibration direction. Preferably, the vibration source causes an ultrasound movement that causes an efficient and harmless way for removing calculus from the teeth. Other examples besides a scaler for removing dental calculus might be medical tools for cutting tissues, bones and/or teeth. Especially, the tool tip is intended for an external treatment and/or performs only a translation movement and no rotational movement in a vibrating state. The irrigation fluid, preferably the irrigation liquid, includes water and/or a disinfecting liquid for reducing risk of bacteremia.

In particular, it is provided that a connection between the moving part and the tool tip is waterproof to avoid having a spirous waterjet.

According to a preferred embodiment, an outlet opening forms an end of the at least one outlet channel for ejecting the irrigation fluid along the ejecting direction and is located in or at the interface section. By arranging or locating the outlet opening in or at the interface section, preferably by incorporating the outlet opening into the interface section, it is possible to locate the outlet opening as close as possible to the inserting section of the tool tip. This allows the producing of the liquid stream that is as close as possible to the course of the tool tip.

In particular, it is provided that the liquid stream, ejected by the outlet opening and/or the at least one outlet channel, does not cross the course of the tool tip, in particular, during the operation. Especially, the configuration of the at least one outlet channel and/or the tool also takes into consideration that during operation the tool tip performs a movement along the vibrational direction and, therefore, during the vibration direction, the course of the tool tip could cross the ejecting direction of the irrigation fluid of an earlier position during the vibrational movement. Therefore, there is a free space between the course of the ejected irrigation liquid and the course of the tool tip anticipated, measured in a direction perpendicular to the ejecting direction or extension direction. It is even conceivable to avoid that the liquid stream, being ejected from the outlet opening, and the course of the tool tip cross each other during operation by using a tapering tool tip. i. e. a tool tip that tapers along the extending direction. In particular, the course of the tool tip and/or the alignment and of the at least one outlet channel are aligned such that a bending or deformation of the tool tip is considered such that the irrigation liquid travels to the pointed tip of the tool tip without crossing the course of the tool tip, in particular its middle section or middle body, even if the tool tip is deformed during operation.

In particular, a cross section of the outlet opening and/or the outlet channel is smaller than 0.8 mm² or between 0.05 and 0.78 mm², preferably between 0.05 and 0.39 mm² and most preferably between 0.05 and 0.15 mm² or even about 0.1 mm². It turned out that the at least one outlet channel and/or an outlet opening having a width, especially a very small width between 0.05 and 0.15 mm², allows providing a strong focused liquid stream or jet that does not tend to be spread, when the ejected liquid stream arrives at the distal end of the tool tip during operation. Further, the amount of used irrigation liquid is reduces. Thus, the ejected irrigation fluid or fluid can be advantageously used for the benefits of irrigation without a significant loss of irrigational fluid, since the irrigational fluid has to overcome the distance between the outlet opening and the distal end of the tool tip.

In particular, in the interface section, the tool tip extends in an extending direction being slanted to the vibration direction in the non-vibrating state, i.e. when the tool tip is connected to the moving part and is not actuated to vibrate. Preferably, the at least one outlet channel is slanted correspondingly to the extending direction, that means extends parallel to the extending direction for ejecting the liquid or the irrigation fluid mainly parallel to the extending direction of the tool tip. In particular, it is provided that the at least one outlet channel is configured such that the at least one outlet channel redirects the irrigation fluid being supplied by a fluid channel incorporated into the moving part of the tool.

Preferably, the at least one outlet channel and/or the tool tip are orientated such that the ejecting direction is parallel to the extending direction. Thus, it is possible to establish an orientation of the ejected liquid stream that mainly extends parallel to the extending direction of the tool tip. Furthermore, it is conceivable that the tool has a plurality of outlet channels, respectively ejecting the irrigation fluid, separately. Preferably the plurality of outlet channels are arranged in an arc section surrounding the tool tip, wherein the arc section is smaller than 180°, preferably smaller than 120° and most preferably smaller than 90°.

In another embodiment of the present invention it is provided that in a mounted state the tool tip forms a part of the at least one outlet channel and/or the tool tip at least partially forms a side of the fluid channel, supplying the at least one outlet channel with fluid. In other words, the inserted tool tip forms a part of the fluid channel. As a consequence, a comparatively compact system in the interface section is realized and/or the irrigation outlet is located as close as possible to the tool tip in a mounted or vibrating state.

Furthermore, it is provided that the outlet opening and/or the at least one outlet channel surrounds the tool tip in the interface region, preferably only partially, in a plane perpendicular to the ejecting direction, wherein preferably the outlet opening and/or the at least one outlet channel circumferentially surrounds the tool tip between 0° and 180°, more preferably between 0° and 90° and most preferably between 0 and 20°. As a consequence, a very small outlet opening is provided by the tool that allows focusing the ejecting liquid stream, in particular at a specific side of the tool tip. Especially, the outlet opening is located in a plane that includes both, the moving part and the tool tip being slanted relative to the moving part. In particular, the outlet opening is located in the interface section at a side facing to the small angle formed between the moving part and the inserted tool tip. As a consequence, the irrigation fluid does not have to surround the inserting section of the tool tip and can leave the at least one outlet channel on that side that is closer to the vibration source. Especially, it is provided that the ejected irrigation fluid travels only along one side of the tool tip. In other words, the ejected irrigation fluid does not surround the tool tip circumferentially, when it is ejected as a stream.

In another embodiment, it is provided that the tool tip has a groove for guiding the irrigation fluid in the outlet channel, wherein the tool tip is preferably exchangeable. By selecting the form or size of the groove, it is possible to have an additional influence on the ejected irrigation fluid. Additionally, it is advantageously possible to locate the at least one outlet channel closer to the middle of the tool tip. In case of an exchangeable tool tip it is further possible to adapt the width of the channel by exchanging the tool to the planned treatment. As a consequence, the optimized ejected stream of irrigation fluid can be adapted for the specific treatment.

In another preferred embodiment it is provided that the outlet channel tapers in a direction parallel to the ejection direction. As a consequence, it is further possible to accelerate the irrigation fluid for increasing a form stability of the cross section. In another embodiment it is provided that the outlet channel has a fourth length, measured along the ejection direction, wherein the ratio between the fourth length and the third length is between 0.02 and 0.44, preferably between 0.1 and 0.3 and most preferably between 0.11 and 0.2 or 0.11 or 0.2. It turned out that those dimensions guarantee an ejected liquid stream that is still well-focused after traveling to the distal end of the tool tip

It is also conceivable that a width of the at least one outlet channel is variable. This advantageously allows adjusting the size of the at least one outlet channel, in particular, for adapting the size and the geometry of the ejected irrigation fluid to the specific requirement of the current treatment. For example, a wall limiting the at least one outlet channel can be shifted or transferred such that the size of the outlet channel can be adapted correspondingly.

In another embodiment it is provided that a cross section of the outlet opening and/or the at least one outlet channel in a plane perpendicular to the ejecting direction is at least partially curved, preferably forming a crescent moon. Such a design influences the geometry of the ejected irrigation fluid stream positively.

Also disclosed is a tool tip for a tool according to the present invention. All benefits and features described for the tool also applies analogously for the tool tip and vice versa.

Also disclosed is a handpiece and/or a moving part of a tool according to the present invention. All the features and benefits described for the tool applies analogously for the handpiece and the moving part and vice versa.

Also disclosed is a method for manufacturing a handpiece and/or a moving part and/or a tool tip including an interface section of the tool.

All benefits and features described previously for the tool applies analogously for the method for manufacturing a handpiece and/or moving part and vice versa.

Wherever not already described explicitly, individual embodiments or their individual aspects and features can be combined or exchanged with one another without limiting or widening the scope of the described invention, whenever such a combination or exchange is meaningful and is in accordance with the invention. Advantages which are described with respect to one embodiment of the present invention are, wherever applicable, also advantageous of other embodiments of the present invention.

In the drawings there is shown the toll according to the invention, wherein :
- **Fig. 1**: schematically illustrates a tool for medical treatment according to a first preferred embodiment in a side view,
- **Fig. 2**: schematically illustrates the tool for medical treatment of figure 1 including a handpiece in a perspective view,
- **Fig. 3**: schematically illustrates the tool for medical treatment of figure 1 including a handpiece in another side view
- **Fig. 4**: schematically illustrates the tool for medical treatment of figure 1 including a handpiece the side view
- **Fig. 5**: schematically illustrates in detail an interface section of the tool for medical treatment of figure 1 in a side view
- **Fig. 6**: schematically illustrates a moving part for a tool according to a second preferred embodiment in a cross-sectional view;
- **Fig. 7**: schematically illustrates the moving part of Fig. 6 in two perspectives views
- **Fig. 8**: a tool tip according to a preferred embodiment of the present invention
- **Fig. 9**: a detailed view on the recess and the outlet channel of the moving part
- **Fig. 10**: schematically illustrates a distal end of a tool according to a third preferred embodiment of the present invention in three perspective views and
- **Fig. 11**: schematically shows a manufacturing step for producing a moving part of the tool of fig. 10.

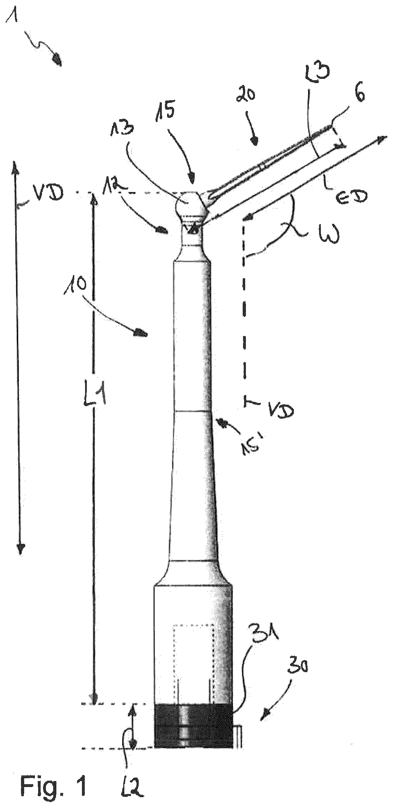

In **Figure 1** schematically a tool 1 for a medical treatment according to a first preferred embodiment is shown in a side view. Especially, Figure 1 illustrates a tool 1 for a dental treatment, in particular a scaler for removing dental calculus. Such a tool 1 uses a vibration movement, in particular an ultrasound vibration movement for moving a tool tip 20 such that the tool tip 20, located at or next to dental calculus at a tooth, removes said dental calculus from the tooth being treated during operation. Preferably, the tool 1 includes a vibration source 30, in particular an ultrasound vibration source, being intended to cause the ultrasound vibration movement along a vibration direction VD. Especially, the vibration source 30 includes at least one piezo element 31. These piezo elements 31 are typically configured such that an electrical energy can be translated to a small expansion of the piezo element 31 in vibration direction VD that creates the ultrasound vibration movement.

In particular, it is provided that the tool 1 further comprises a moving part 10 and a tool tip 20. In particular, the moving part 10 represents a sonotrode or horn. Thereby, the tool tip 20 represents in figure 1 the scaler that interacts with a surface of a tooth, in particular its outside, during operation. Especially, the tool tip 20 is formed as a non-bent component. In other words: the tool tip 20 extends along an extending direction ED in form of a needle, i. e. the tool tip 20 has a straight course along the extension direction ED from a inserting section at a proximal end 4, being inserted into a recess 17 in the interface section 15, to a pointed tip at the distal end 6 of the tool tip 20. As a consequence, the tool tip 20 differs from the scaler tips known by the prior art that are typically bent for meeting the requirement that the tool tip 20 is curved forming an angle of around 120° relative to the vibration direction, in particular for meeting the requirements that are defined by an oral cavity geometry.

However, instead of using a screw section, which allows connecting the tool tip 20 to the moving part 10 by a screw mechanism, it is provided according to the embodiment shown in figure 1 to connect the tool tip 20 to the moving part 10 in an interface section 15, in particular without a screwing mechanism. Preferably, the tool tip 20 is connected to the moving part 10 in the interface section 15 by a frictional-fitting and/or form-fitting, in particular without a screwing mechanism. Especially, the tool tip 20 is connected to the interface section 15 of the moving part 10 by a press fit connection. Depending on a strength of the press fit, the tool tip 20 is arranged or connected to the moving part 10 permanently or non-permanently, for example.

Furthermore, it is provided that the tool tip 20 is inserted in a recess 17, wherein the recess 17 is included in the moving part 10. Thereby, the tool tip 20 extends in an extending direction ED-being slanted relative to the vibration direction VD in the interface section 15. It turned out that by connecting a non-bent tool tip 20 such to the moving part 10 that the tool tip 20 itself extends slanted to the vibration direction VD of the moving part 10, it is possible to transfer the vibrational movement from the moving part 10 to the tool tip 20 in a more efficient way, compared to those scalers having a screw section for screwing the tool tip 20 to the moving part 10 of the tool.

Another benefit of using a non-bent, i. e. needle-like, tool tip 20 is the possibility of relying on new or different materials that, for example, are not able to be bent in a way sufficient to realize a bent tool tip 20 in form of a scaler of the prior art. Preferably, the extending direction ED and the vibration direction VD of the tool 1 having the non-bent tool tip 20 form an angle W that mainly corresponds to 120°, for meeting the requirements, being defined by the oral cavity geometry.

Preferably, it is provided that the tool 1 has a first length L1 between a front end of the vibration source 30 and a front end being faced away from the vibration source 30, measured along the vibration direction VD. Due to the connection by a press fit in the interface section 15, it is possible to decrease a third length L3 of the tool tip 20 along the extending direction ED and/or a second length L2 of the vibration source 30 along the vibration direction VD. As a consequence, it is possible to locate the front end of the moving part 10 facing away from the vibration source 30 closer to the tooth during operation. This makes the energy transfer for removing the calculus even more efficient.

Preferably, a ratio of the second length L2 to the first length L1 is between 0.01 and 0.5, preferably between 0.1 and 0.3 and most preferably between 0.15 and 0.25. Especially, the first length L1 has value between 20 and 80 mm, preferably between 30 and 70 mm and most preferably 40 and 60 mm, especially for titanium material, and in particular depends on the frequency and transducer configuration, and wherein the second length has a value between 1 and 15 mm, preferably between 2 and 8 mm and most preferably between 3.5 and 7.5 mm. Preferably, the third length L3 depends on the application. For example the third length is 20 mm for a universal tip (sub and supragingival), but could be longer or shorter depending of the application, for example shorter for a high amplitude supragingival tip (around 14mm). Furthermore, reducing the second length L2, in particular compared to the first length L1 it is advantageously possible to produce a more compact and smaller handpiece 40 for the tool 1 that allows a much easier handling for an operator.

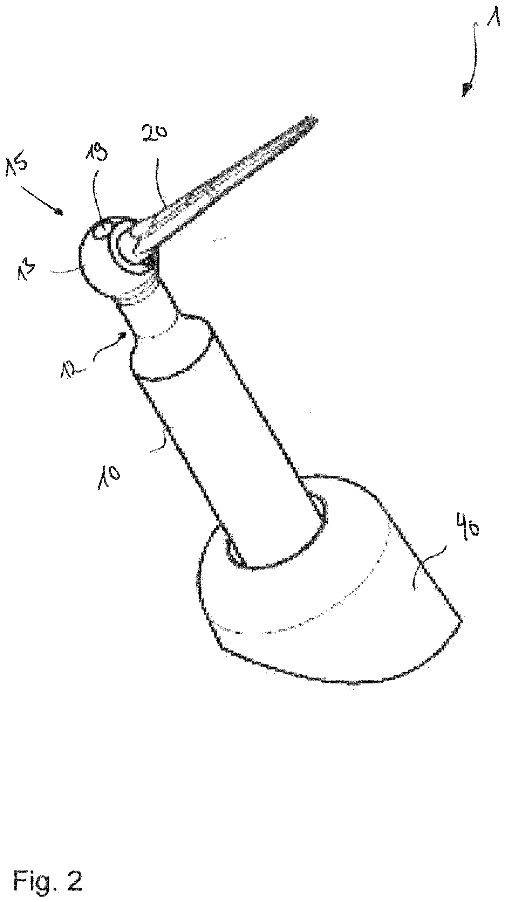

In **Figure 2****,** the tool 1 for medical treatment of figure 1, including a handpiece 40, is shown in a perspective view. As it is illustrated, the moving part 10 reaches through a hole in a region at the rear end of the handpiece 40. In particular, it is provided that the handpiece 40, in particular its housing, at least partially surrounds the moving part 10 of the tool 1. For example, it is also conceivable that the moving part 10 is a multipart-system having another interface section 15' that allows removing at least a part of the moving part 10 from another section being permanently connected to the vibrational source 30, for example.

Furthermore, it is shown in Figure 2 that the needle-like, non-bent tool tip 20 tapers to its distal end 6. Furthermore, it is preferably provided that the tool tip 20 has a polygonal cross section in a plane perpendicular to the extending direction ED. For example, the cross section has a rectangular form. Furthermore, it is provided that at its rear end, i. e. its proximal end 4, the tool tip 20 has an inserting section. This inserting section is intended to be inserted into a recess 17 of the moving part 10 in a mounded state such that the tool tip 20 is connected to the moving part 10 by a press fit. Preferably, the interface section 15 is configured as a lock and key principle that allows only those tool tips 20 to be connected to the recess 17 that have the same cross section in the inserting section that corresponds to the form of the recess 17 of the moving part 10, in particular in the interface section 15. Furthermore, it is provided that the recess 17 is part of a ball- or cylinder-like section 13 of the moving part 10 that forms the rear end of the moving part 10, particularly being faced away from the ultrasound source 30. Furthermore, an additional opening 19 is provided at the front-end of the moving part 10 being faced away from the ultrasound vibration source 30. Such an additional opening 19 allows access, in particular visual access, to the inserting section of the tool tip 20 being inserted into the recess 17. As a consequence, it is possible to identify the used tool tip 20, when the tool tip 20 is marked, for example by a colour such that it is possible to visually identify whether the proper tool tip 20 is arranged inside the recess correctly. Alternatively or additionally it is possible to use this opening 19 for fastening or fixing the tool tip 20 to the moving part 10 or support the press-fit connection by an additional means for fixation, such as a screw reaching through the opening 19.

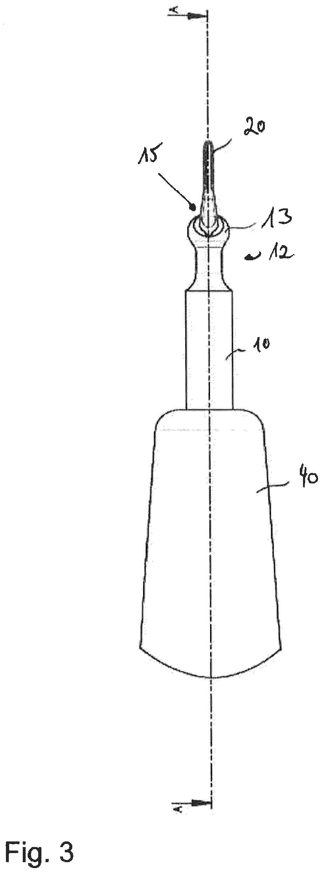

The tool 1 for medical treatment in figure 1, including a headpiece 40 is shown in another side view in figure 3. In particular, it is shown that the moving part 10 has a tapered section 12, being located preferably directly next to a ball-like section 13. Such a design of the moving part 10, in particular at its rear end (seen from the vibration source 30, corresponds to distal end of the moving part 10), allows concentrating the vibrational movement, caused by the vibration source 30 to the interface section 15 for a most efficient transfer of the movement energy from the moving part 10 to the tool tip 20.

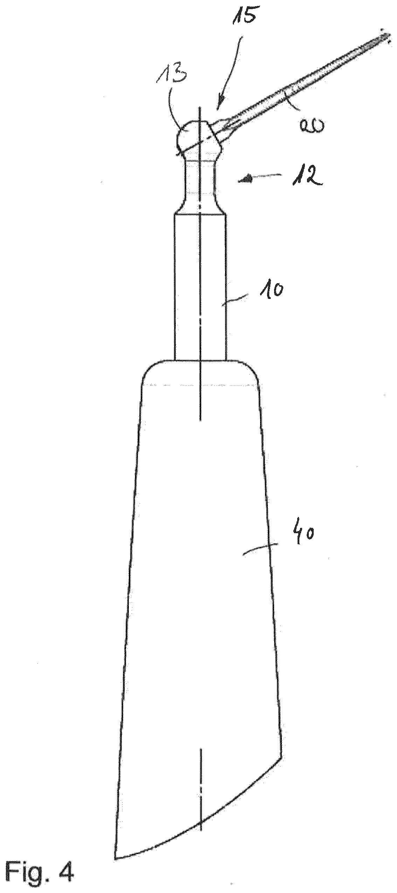

In **Figure 4****,** the tool 1 for medical treatment of figure 1, including the handpiece 40 is shown in the side view. It is shown that the handpiece 40 tapers along the vibrational direction VD.

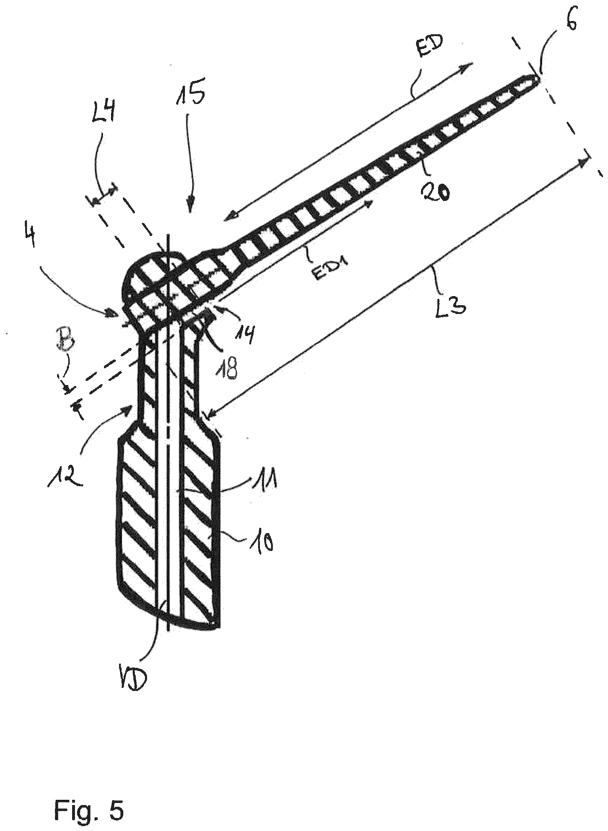

In **Figure 5****,** in detail the interface section 15 of the tool 1 for medical treatment of figure 1 is shown in a cross sectional side view is shown. In particular, it is provided that the tool tip 20 reaches through a recess 17 that is included in the ball-like section 13 of the rear end of the moving part 10, facing away from the vibration source 30. For example, the tool tip 20 protrudes from the recess 17, being formed as through bore, in a direction facing away from the pointed tip or distal tip 6 of the tool tip 20. In particular, it is provided that the recess 17 is slanted relative to the vibration direction VD and defines the direction of the tool tip 20, i. e. the extending direction ED of the tool tip 20 being inserted in the recess 17.

Furthermore, it is provided that the tool 1 includes a fluid channel 11, being located inside of the moving part 10, the fluid channel 11 preferably allowing the transport of an irrigation fluid from the handpiece 40 to an outlet opening 14 via at least one outlet channel 18 located in the interface section 15 of the tool 1.

In particular, the at least one outlet channel 18 is supplied with the irrigation fluid by the fluid channel 11. In the embodiment shown in figure 5, the at least one outlet channel 18 is located downstream to the fluid channel 11 and, in particular, extends slanted to the vibrational direction VD and the course of fluid channel 11. In particular, at least one outlet channel is slanted relative to the vibration direction about an angle larger than 90°. Preferably, the at least one outlet channel 18 is configured, in particular orientated or aligned, such that the irrigation fluid, ejected from the at least one outlet channel 18, in particular, via an outlet opening 14 of the at least one outlet channel 18, is directed along an ejecting direction ED1. The ejecting direction ED1 in figure 5 mainly corresponds to the straight course of the tool tip 20, i. e. the ejecting direction ED1 is parallel to the straight course of the extending direction ED of the tool tip 20. As a consequence, the irrigation fluid being ejected along the ejecting direction ED1 does not cross the course of the tool tip 20, in particular, during its operation. As a consequence, the irrigation fluid being ejected is not redirected by an interaction with the tool tip 20, in particular, because the irrigation fluid is not directed on the middle section or basis part of the tool tip, i. e. any other part besides the distal end 6 of the tool tip 20. Thus, even for strong vibrations of the tool tip, otherwise creating a fog, can be avoided.

Furthermore, it is provided that the at least one outlet channel 18 has a fourth length L4 measured along the extending direction ED of the tool tip 20. Preferably, the fourth length L4 has a value of 0.1 and 10 mm, more preferably between 0.3 and 8 mm and most preferably between 0.5 and 4 mm or even around 2 mm. In particular, a ratio between the fourth length L4 and the third length L3 is between 0.02 and 0.44, preferably between 0.1 and 0.3 and most preferably between 0.15 and 0.25. A suitable fourth length L4 guarantees that the irrigation fluid is ejected in a stream having a mainly constant cross sectional from the outlet opening 14 to the distal end 6 of the tool tip 20. In other words: the proper chosen fourth length L4 allows providing a focused liquid stream. Furthermore, it is provided that a width B measured perpendicular to the ejecting direction ED1 is between 0.1 and 0.8 mm, preferably between 0.15 and 0.5 mm and most preferably between 0.22 and 0.28 mm and/or even about 0.25 mm. Such dimensions allow producing a liquid stream that is mainly focused on a specific point or spot at the distance from the outlet opening 14 that mainly corresponds to the third length L3 of the tool tip 20. Furthermore, such a small opening outlet 14 and/or the at least one outlet channel 18 reduces an amount of irrigation fluid, without losing the positive benefits of using an irrigation fluid.

Furthermore, it is provided that the at least one outlet channel 18 is part of the interface section 15. Contrary to the tools 1 known from the prior art, the at least one outlet channel 18 is not incorporated into the tool tip 20. Instead, the at least one outlet channel 18 is part of the interface section 15. For example, the tool tip 20, in particular, the outside of the inserting section of the tool tip 20 forms an outer wall of the at least one outlet channel 18. In particular, it is provided that the tool tip 20 also forms an end of the fluid channel 11 in the moving part 10 and supports redirection of the irrigation fluid from the fluid channel to the at least one outlet channel 18.

Preferably, it is provided that a cross section A of the outlet opening 14 and/or the outlet channel 18 is smaller than 0.8 mm² or between 0.05 and 0.78 mm², preferably between 0.05 and 0.39 mm² and most preferably between 0.05 and 0.15 mm² or even about 0.1 mm². Furthermore, the at least one outlet channel 18 is configured as such that the outlet channel 18 does not surround the tool tip 20 around its total circumference, measured in a plane perpendicular to the ejecting direction ED1. Especially, the outlet opening 14 and/or the at least one outlet channel 18 surrounds the tool tip 20 circumferentially between 1° and 180°, more preferably between 1° and 90° and most preferably between 1° and 20°. The circumferential extension of the at least one outlet channel 18 or, more precisely, the outlet opening 14 is, for example, is illustrated also in figure 3. Furthermore, it is provided that a cross section of the at least one outlet channel 18 in a plane perpendicular to the ejecting direction ED1 is at least partially arc-like or curved. For example, the cross section forms a half of a circle. Thus, it is possible to optimize the shape of the liquid stream being ejected from the outlet opening 14 to optimise the effect of liquid irrigation during operation.

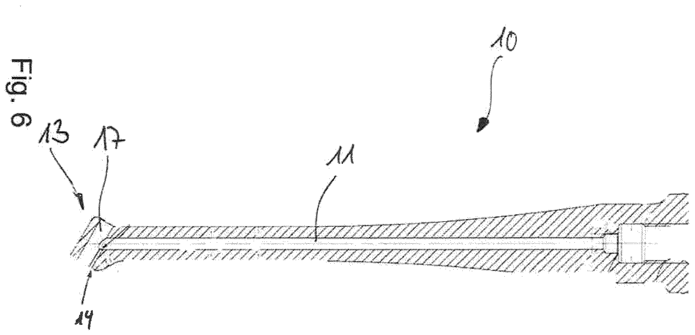

In **Figure 6****,** schematically a moving part 10 for a tool 1 according to a second preferred embodiment in a cross-sectional view is shown. The moving part 10 illustrated in figure 6 mainly differs from the moving part 10 of the tool shown in the figures 1 to 5 by using a cylinder-like portion 13 that forms the rear end of the moving part 10. Furthermore, it is provided that the fluid channel 11 is larger than the outlet channel 18. In particular, the cross section of the fluid channel 11, measured in a plane perpendicular to the stream direction, is at least twice, preferably at least three times and most preferably at least four time bigger than the cross section A of the outlet channel 18, measured in a plane perpendicular to the stream direction.

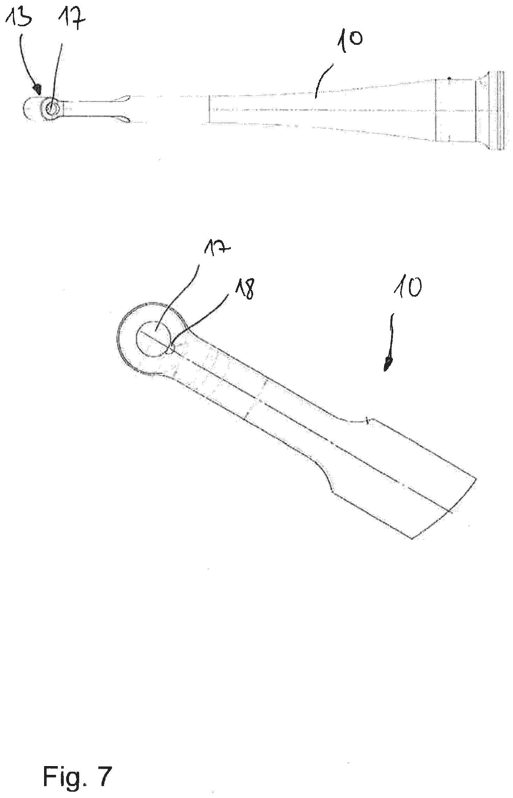

**Figure 7** shows the moving part 10 of figure 6 in two perspective views. In particular, the cylinder-like portion 13 of the moving part 10 includes a recess 17 for receiving the tool tip 20. In particular, the perspective in the lower illustration shows both the recess 17 and the outlet channel 18 in a top view.

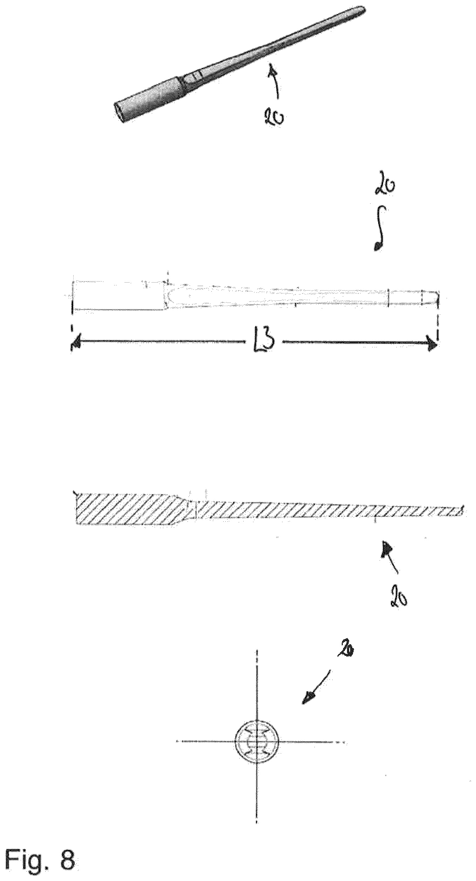

**Figure 8** shows a tool tip 20 for a moving part 10 according to the first or second embodiment in different perspectives. In particular, it is provided that the tool tip 20 is formed at least partially by a flat, straight tool tip 20 or needle.

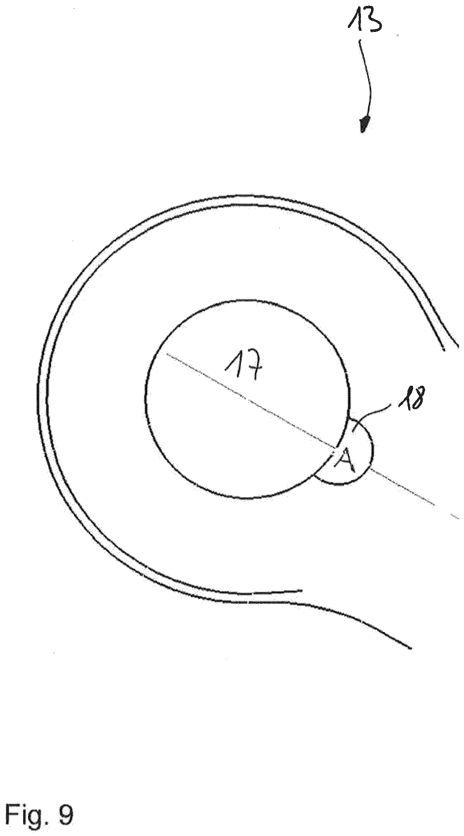

**Figure 9** shows a detailed view on the outlet channel 18 and the recess 17 of the moving part 10. In particular, figure 9 illustrates the cross section A of the outlet channel 18 of the moving part 10. In particular, the cross section A of the outlet opening 14 and/or the outlet channel 18 is smaller than 0.8 mm² or between 0.05 and 0.78 mm², preferably between 0.05 and 0.39 mm² and most preferably between 0.05 and 0.15 mm² or even about 0.1 mm².

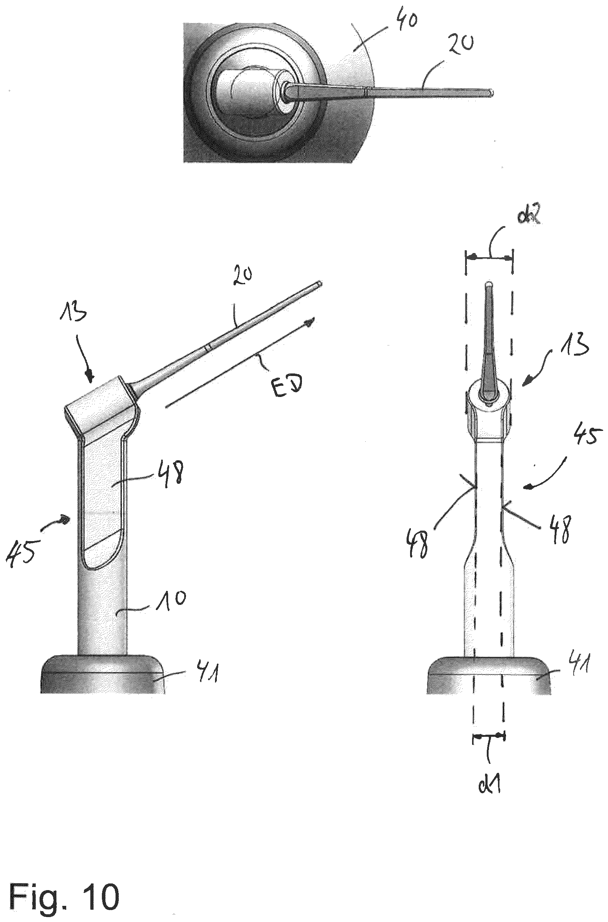

In **figure 10** a distal end of a tool 1 according to a third preferred embodiment is illustrated in three perspective views. The third embodiment mainly corresponds to the second preferred embodiment shown in the figures 6 and 7. Especially, the moving part 10 of this tool 1 includes a cylinder like section 13 at its distal end. Further, the moving part 10 includes a shaft section 45. The shaft section 45 extends at least half of the spacing between the cylinder like section 13 and a housing 41 of the handpiece. The shaft section 45 preferably has a reduced cross section and more preferably includes two flat surfaces 48 being parallel to each other and spaced from each other by a distance d1. In particular, a ratio of the distance d1 to an outer diameter d2 of the cylinder-like section of the moving part 10 is between 0.5 and 0.9, preferably between 0.6 and 0.8 and more preferably between 0.7 and 0.78. Such a slim shaft section 45 reduce the probability that the moving part 10 blocks the view of the operator to the tool tip 20 during operation, in particular to a treatment zone and the vibrating tool tip 20.

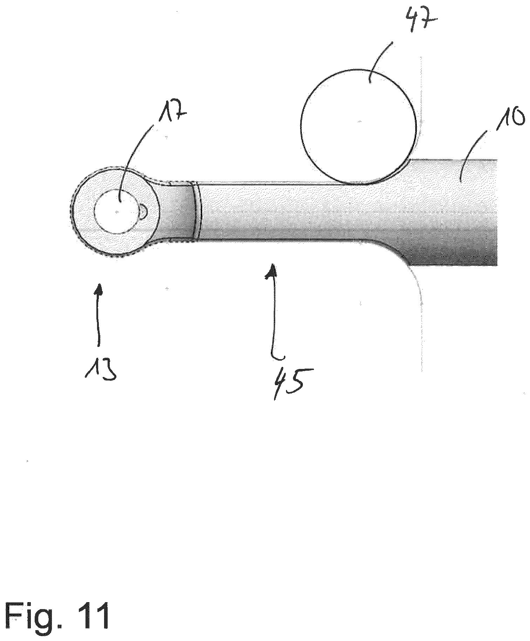

**Figure 11** shows a manufacturing step for producing a moving part 10 of the tool 1 of fig. 10. Especially, it is possible in case of a configuration, having a shaft section 45 and a cylinder-like section 13 at the distal end of the moving part 10 to use a machining process such as milling to create the corresponding outer contour of the moving part 10 at its distal end. Thus it is possible to create the parallel orientated flat surfaces 48 and the cylinder-like section 13, having a symmetry axis being parallel to an axis being slanted about 120° relative to the vibration direction VD and/or parallel to the extending direction ED of the tool tip 20 or the recess 17 for receiving the tool tip 20, in a simple manner. Especially, the manufacturing process can be simplified and accelerated, and as a result the cost for manufacturing the moving part 10 can be reduced. Actually, the circle in figure 11 illustrates a milling tool 47, which is used for creating the contour of the moving part 10 of figure 10. Especially, it is provided that the milling tool 47 is orientate about 120° to an extending direction of a rod, which is about to be processed to form the moving part 10. By a relative translation movement along the corresponding path (during the rotating movement of the milling tool for machining), automatically the orientation of the cylinder-like section 13 is created. And the end section of the shaft section 45 is slanted corresponding

### Reference numbers:

- 1: tool
- 4: proximal end
- 6: distal end
- 10: moving part
- 11: fluid channel
- 12: tapered section
- 13: ball- or cylinder-like section
- 14: outlet opening
- 15: interface section
- 15': another interface section
- 17: recess
- 18: outlet channel
- 19: opening
- 20: tool tip
- 30: vibration source
- 31: piezo element
- 40: handpiece
- 41: housing
- 45: shaft section
- 47: milling tool
- 48: flat surface
- d1: distance
- d2: outer diameter
- B: width
- VD: vibration direction
- ED: extending direction
- ED1: ejecting direction
- W: angle
- L1: first length
- L2: second length
- L3: third length
- L4: fourth length
- A: cross section

## Claims

1. A tool (1) for a medical treatment, in particular a dental treatment, comprising
- a handpiece (40) having a vibration source (30),
- a moving part (10) of the handpiece (40), performing a vibration movement along a vibration direction (VD) in a vibrating state,
- a tool tip (20) being connected to the moving part (10) of the handpiece (40) in an interface section (15), in a non-vibrating state the tool tip (20) extending along an extending direction (ED), in particular along a straight extending direction (ED), while in the vibrating state the tool tip (20) performs a flexural movement in a plane extending along the extending direction of the tool tip (20) and perpendicular to the cross section of the tool tip (20), and
- at least one outlet channel (18) for ejecting an irrigation fluid along a ejecting direction (ED1),
wherein the tool (1) is configured such that the irrigation fluid travels to a distal end (6) of the vibrating tool tip (20) without crossing the tool tip (20).

2. The tool (1) according to claim 1, wherein an outlet opening (14) forms an end of the at least one outlet channel (18) for ejecting the irrigation fluid along the ejecting direction (ED1) and is located in or at the interface section (15).

3. The tool (1) according to one of the preceding claims, wherein a cross section (A) of the outlet opening (14) and/or the outlet channel (18) is smaller than 0.8 mm² or between 0.05 and 0.78 mm², preferably between 0.05 and 0.39 mm² and most preferably between 0.05 and 0.15 mm² or even about 0.1 mm².

4. The tool (1) according to claim 1, wherein in the interface section (15) the tool tip (20) extends in an extending direction (ED) being slanted to the vibration direction (VD) in a non-vibrating state.

5. The tool (1) according to one of the preceding claims, wherein the at least one outlet channel (18) and/or the tool tip (20) is orientated such that the ejection direction (ED1) is parallel to the extending direction (ED).

6. The tool (1) according to one of the preceding claims, wherein
- in the mounted state the tool tip (20) forms a part of the at least one outlet channel (18) and/or
- the tool tip (20) at least partially forms a side of the at least one outlet channel (18) and/or a side of a fluid channel (11) supplying the at least one outlet channel (18) with the irrigation fluid.

7. The tool (1) according to one of the preceding claims, wherein the outlet opening (14) surrounds the tool tip (20) in the interface region (15), preferably only partially, in a plane perpendicular to the ejecting direction (ED1), wherein preferably the outlet opening (14) circumferentially surrounds the tool tip (20) between 1° and 180°, more preferably between 1° and 90° and most preferably between 1° and 20°.

8. The tool (1) according to one of the preceding claims, wherein the tool tip (20) has a groove for guiding the irrigation fluid in the at least one outlet channel (18), wherein the tool tip (20) is preferably exchangeable.

9. The tool (1) according to one of the preceding claims, wherein the at least one outlet channels (20) tapers in a direction parallel to the ejecting direction (ED1).

10. The tool (1) according to one of the preceding claims, wherein the width (B) of the at least one outlet channel (18) is variable.

11. The tool (1) according to one of the preceding claims, wherein a cross section of the outlet opening (14) and/or the at least one outlet channel (18) in a plane perpendicular to the ejecting direction (ED1) is at least partially curved, preferably forming a crescent moon.

## Patentansprüche

1. Werkzeug (1) für eine medizinische Behandlung, insbesondere eine zahnärztliche Behandlung, aufweisend
- ein Handstück (40) mit einer Vibrationsquelle (30),
- ein bewegliches Teil (10) des Handstücks (40), das eine Vibrationsbewegung entlang einer Vibrationsrichtung (VD) in einem vibrierenden Zustand ausführt,
- eine Werkzeugspitze (20), die in einem Schnittstellenbereich (15) mit dem beweglichen Teil (10) des Handstücks (40) verbunden ist, wobei sich die Werkzeugspitze (20) in einem nicht vibrierenden Zustand entlang einer Erstreckungsrichtung (ED), insbesondere entlang einer geraden Erstreckungsrichtung (ED), erstreckt, während die Werkzeugspitze (20) im vibrierenden Zustand eine Biegebewegung in einer Ebene ausführt, die sich entlang der Erstreckungsrichtung der Werkzeugspitze (20) und senkrecht zum Querschnitt der Werkzeugspitze (20) erstreckt, und
- mindestens einen Auslasskanal (18) zum Ausstoßen einer Spülflüssigkeit entlang einer Ausstoßrichtung (ED1),
wobei das Werkzeug (1) so konfiguriert ist, dass die Spülflüssigkeit zu einem distalen Ende (6) der vibrierenden Werkzeugspitze (20) gelangt, ohne die Werkzeugspitze (20) zu kreuzen.

2. Werkzeug (1) nach Anspruch 1, wobei eine Auslassöffnung (14) ein Ende des mindestens einen Auslasskanals (18) zum Ausstoßen der Spülflüssigkeit entlang der Ausstoßrichtung (ED1) bildet und im oder am Schnittstellenbereich (15) angeordnet ist.

3. Werkzeug (1) nach einem der vorangehenden Ansprüche, wobei ein Querschnitt (A) der Auslassöffnung (14) und/oder des Auslasskanals (18) kleiner als 0,8 mm² oder zwischen 0,05 und 0,78 mm², bevorzugt zwischen 0,05 und 0,39 mm² und besonders bevorzugt zwischen 0,05 und 0,15 mm² oder sogar etwa 0,1 mm² ist.

4. Werkzeug (1) nach Anspruch 1, **dadurch gekennzeichnet, dass** sich die Werkzeugspitze (20) im Schnittstellenbereich (15) in einer Erstreckungsrichtung (ED) erstreckt, die in einem nicht vibrierenden Zustand schräg zur Vibrationsrichtung (VD) verläuft.

5. Werkzeug (1) nach einem der vorangehenden Ansprüche, wobei der mindestens eine Auslasskanal (18) und/oder die Werkzeugspitze (20) so ausgerichtet ist, dass die Ausstoßrichtung (ED1) parallel zur Erstreckungsrichtung (ED) verläuft.

6. Werkzeug (1) nach einem der vorangehenden Ansprüche, wobei
- die Werkzeugspitze (20) im montierten Zustand einen Teil des mindestens einen Auslasskanals (18) bildet und/oder
- die Werkzeugspitze (20) zumindest teilweise eine Seite des mindestens einen Auslasskanals (18) und/oder eine Seite eines Fluidkanals (11) bildet, der den mindestens einen Auslasskanal (18) mit der Spülflüssigkeit zuführt.

7. Werkzeug (1) nach einem der vorangehenden Ansprüche, wobei die Auslassöffnung (14) die Werkzeugspitze (20) im Schnittstellenbereich (15), vorzugsweise nur teilweise, in einer Ebene senkrecht zur Ausstoßrichtung (ED1) umgibt, wobei vorzugsweise die Auslassöffnung (14) die Werkzeugspitze (20) in Umfangsrichtung zwischen 1° und 180°, bevorzugt zwischen 1° und 90° und besonders bevorzugt zwischen 1° und 20° umgibt.

8. Werkzeug (1) nach einem der vorangehenden Ansprüche, wobei die Werkzeugspitze (20) eine Rille zur Führung der Spülflüssigkeit in den mindestens einen Auslasskanal (18) aufweist, wobei die Werkzeugspitze (20) bevorzugt austauschbar ist.

9. Werkzeug (1) nach einem der vorangehenden Ansprüche, wobei sich der mindestens eine Auslasskanal (20) in einer Richtung parallel zur Ausstoßrichtung (ED1) verjüngt.

10. Werkzeug (1) nach einem der vorangehenden Ansprüche, wobei die Breite (B) des mindestens einen Auslasskanals (18) variabel ist.

11. Werkzeug (1) nach einem der vorangehenden Ansprüche, wobei ein Querschnitt der Auslassöffnung (14) und/oder des mindestens einen Auslasskanals (18) in einer Ebene senkrecht zur Ausstoßrichtung (ED1) zumindest teilweise gekrümmt ist, bevorzugt in Form einer Mondsichel.

## Revendications

1. Outil (1) pour un traitement médical, en particulier un traitement dentaire, comprenant
- une pièce à main (40) dotée d'une source de vibrations (30),
- une partie mobile (10) de la pièce à main (40), effectuant un mouvement de vibration le long d'une direction de vibration (VD), dans un état vibrant,
- une pointe d'outil (20) reliée à la partie mobile (10) de la pièce à main (40) dans une section d'interface (15), dans un état non vibrant la pointe d'outil (20) s'étendant le long d'une direction d'extension (ED), en particulier le long d'une direction d'extension droite (ED), tandis que dans l'état vibrant la pointe d'outil (20) effectue un mouvement de flexion dans un plan qui s'étend le long de la direction d'extension de la pointe d'outil (20) et perpendiculairement à la section transversale de la pointe d'outil (20), et
- au moins un canal de sortie (18) destiné à éjecter un fluide d'irrigation le long d'une direction d'éjection (ED1),
dans lequel l'outil (1) est configuré de telle sorte que le fluide d'irrigation s'écoule vers une extrémité distale (6) de la pointe d'outil (20) vibrant, sans traverser la pointe d'outil (20).

2. Outil (1) selon la revendication 1,
dans lequel une ouverture de sortie (14) forme une extrémité dudit au moins un canal de sortie (18) destiné à éjecter le fluide d'irrigation le long de la direction d'éjection (ED1), et est située dans ou au niveau de la section d'interface (15).

3. Outil (1) selon l'une des revendications précédentes,
dans lequel une section transversale (A) de l'ouverture de sortie (14) et/ou du canal de sortie (18) est inférieure à 0,8 mm² ou est comprise entre 0,05 et 0,78 mm², de préférence entre 0,05 et 0,39 mm² et de manière particulièrement préférée entre 0,05 et 0,15 mm², ou est d'environ 0,1 mm².

4. Outil (1) selon la revendication 1,
dans lequel, dans la section d'interface (15), la pointe d'outil (20) s'étend dans une direction d'extension (ED) inclinée par rapport à la direction de vibration (VD), à l'état non vibrant.

5. Outil (1) selon l'une des revendications précédentes,
dans lequel ledit au moins un canal de sortie (18) et/ou la pointe d'outil (20) est orienté(e) de telle sorte que la direction d'éjection (ED1) est parallèle à la direction d'extension (ED).

6. Outil (1) selon l'une des revendications précédentes, dans lequel
- à l'état monté, la pointe d'outil (20) forme une partie dudit au moins un canal de sortie (18), et/ou
- la pointe d'outil (20) forme au moins partiellement un côté dudit au moins un canal de sortie (18) et/ou un côté d'un canal à fluide (11) alimentant ledit au moins un canal de sortie (18) en fluide d'irrigation.

7. Outil (1) selon l'une des revendications précédentes,
dans lequel l'ouverture de sortie (14) entoure la pointe d'outil (20) dans la zone d'interface (15), de préférence seulement partiellement, dans un plan perpendiculaire à la direction d'éjection (ED1),
de préférence, l'ouverture de sortie (14) entoure la pointe d'outil (20) circonférentiellement sur une plage comprise entre 1° et 180°, de préférence entre 1° et 90° et de manière particulièrement préférée entre 1° et 20°.

8. Outil (1) selon l'une des revendications précédentes,
dans lequel la pointe d'outil (20) présente une rainure destinée à guider le fluide d'irrigation dans ledit au moins un canal de sortie (18), la pointe d'outil (20) étant de préférence interchangeable.

9. Outil (1) selon l'une des revendications précédentes,
dans lequel ledit au moins un canal de sortie (20) se rétrécit dans une direction parallèle à la direction d'éjection (ED1).

10. Outil (1) selon l'une des revendications précédentes,
dans lequel la largeur (B) dudit au moins un canal de sortie (18) est variable.

11. Outil (1) selon l'une des revendications précédentes,
dans lequel une section transversale de l'ouverture de sortie (14) et/ou dudit au moins un canal de sortie (18) dans un plan perpendiculaire à la direction d'éjection (ED1) est au moins partiellement incurvée, formant de préférence un croissant de lune.
